# EUROPEAN PATENT SPECIFICATION

(11) **EP 1 413 839 B1**
(45) Date of publication and mention of the grant of the patent: **21.02.2007**
(21) Application number: 03425678.4
(22) Date of filing: 21.10.2003
(51) Int. Cl.: F25D 13/06, F25D 3/11, F25D 25/04, F25D 21/04

(54) **An enhanced tunnel, with non re-usable driving film, for refrigerating food products**
Verbesserter Tunnel zur Kühlung von Nahrungsmitteln mit nichtwiederverwendbarem Folienförderband
Tunnel amélioré de réfrigération de produits alimentaires avec un film d'entrainement non réutilisable

(30) Priority: 22.10.2002 IT RN20020018 U
(43) Date of publication of application: 28.04.2004
(73) Proprietor: Frigo Tecnica Internazionale S.p.A, 63038 Ripatransone (Ascoli Piceno) (IT); Meta Meccanica S.r.l., 63038 Ripatransone (AP) (IT)
(72) Inventor: Lucci, Giovanni, 63038 Ripatransone (Ascoli Piceno) (IT); Pennesi, Marco, 63013 Grottammare (Ascoli Piceno) (IT)
(74) Representative: Gentili, Enrico

(56) References cited:
- US-A- 3 122 897
- US-A- 3 757 533
- US-A- 4 205 536
- US-A- 6 009 719

## Description

The present invention relates to a tunnel for refrigerating food products according to the preamble of claim 1. Such a tunnel is disclosed in FR 9807727 B.

Currently, the technology for the continuous freezing o f food products uses refrigeration tunnels B described for example in the document FR 9807727 B which comprise an isothermal refrigeration cell essentially defined by the volume delimited by a horizontal refrigerated plane, and by an overlying container with heat insulating walls, which contains means for the cryogenic refrigeration of the atmosphere of the cell. The refrigerated plane causes the refrigeration of the products by conduction. The cryogenic refrigeration means, vice versa, subtract heat from the products by convection, for instance exploiting the heat exchange correlated to the thermal expansion of liquefied gases.

Within the refrigeration cell, with rubbing above the refrigerated plane, a thin plastic film is made to advance continuously; said film, travelling through the cell between a section for the entry of the products and a section for their exit, transports above it the products to be refrigerated, preventing their direct contact with the underlying plane which, otherwise, would cause the products to adhere to the plane itself. The plastic film is not re-usable, so in the course of its single use it unwinds from a first dispensing reel and, after travelling through the cell, it winds on a second collecting reel to be evacuated from the installation after its complete unwinding. The advancement of the film along the cell is obtained by suitable motorisation means associated to the collecting reel.

Due to the continuous variation in the diameter of the collecting reel, the film advancing system is provided with a control of the speed of the driving means, able to ensure that the film will transit at constant speed along the refrigeration cell: this condition becomes essential to obtain a correct, homogeneous freezing for all products as they are processed.

In current advancing systems, the motorisation is obtained by means of mechanical transmissions moved by electrical motors. Speed control is effected in some cases by means of electronic controls, associated to encoders, which manage the rotating velocity of the motors, varying it as required. In other case, control is effected in a more simple, but also coarser, fashion, by means of mechanical clutch devices, which operate on the transmission of motion.

As to heat insulating containers, the prior art provides for the use, on their walls, of sealing gaskets able to abut with the plane. To prevent the gaskets from having to adhere with the plane with which they are destined to come in contact, the area of mutual contact between the gaskets and the plane is heated by the addition of heat. This is obtained by suitably conveying, within the plane, a carrier fluid prepared by means of specific and separate heating installations in which the fluid is heated with resistors through which electric current flows.

Because of the aforementioned constructional arrangements, known solutions have, particularly in regards to the film advancing systems, the drawbacks of a high constructional complexity and a difficult management which penalises operating reliability.

Management of the film advancement by means of electronic controls is not only costly, but also complex and not quite stable.

Management by means of clutch mechanical controls, instead, is simple and economical, but also rather inaccurate and coarse.

As to the gasket heating system, it further complicates the construction of the installations because of its own apparatuses and it also penalises its energy consumption, this obviously being due to the electrical energy consumption required to heat the wall gaskets.

A primary object of the present invention is to overcome said drawbacks by means of a tunnel that has greater simplicity of construction, greater reliability and capability for accurate control over the velocity of sliding of the film.

Another object is to obtain lower installation costs while also providing greater energy efficiency and hence lower operating costs.

In accordance with the invention, said object is achieved by a tunnel for refrigerating food products having the features defined in claim 1.

The technical characteristics of the invention, according to the aforesaid objects, can be clearly noted from the content of the claims set out below and its advantages shall become more readily apparent in the detailed description that follows, provided with reference to the accompanying drawings, which show an embodiment provided purely by way of non limiting example, in which:
- Figure 1 is a perspective global view of a tunnel according to the invention;
- Figure 2 is a top plan view of the tunnel of Figure 1;
- Figures 3 and 4 are respectively perspective views, in enlarged scale, of some details of the invention shown with some parts removed, the better to highlight other parts;
- Figure 5 shows a detail of the invention illustrated in enlarged scale.

With reference to the figures of the accompanying drawings, the reference number 1 globally designates a refrigeration tunnel, in particular for the continuous freezing of food products with ventilated contact.

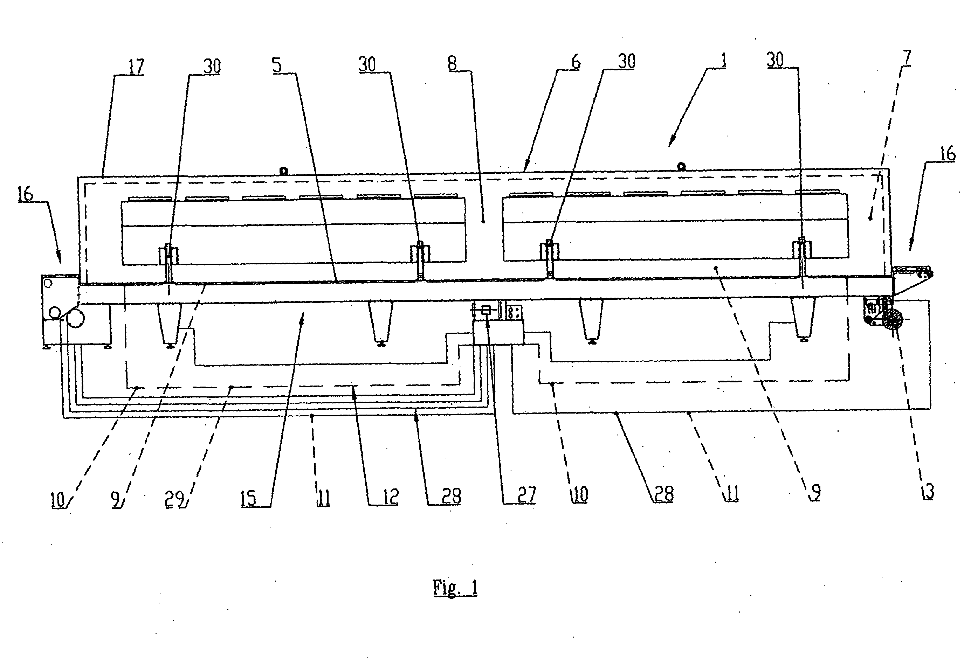

The tunnel 1 essentially comprises [Figure 1]: a load-bearing structure, designated by the reference number 15; a heat insulating container 6; and means for advancing a plastic film, globally designated by the reference number 16.

The load bearing structure 15, of conventional construction, is superiorly provided with a refrigerated horizontal plane 5, above which is positioned the heat insulating container 6. The latter is constituted in particular by a booth delimited by vertical planar lateral walls 8 and by a horizontal top wall 1 7; walls 8 and 17 are all constituted by adequately heat insulated panels.

The booth can be raised from, and lowered against, the horizontal plane 5 and bears gaskets 9 able to provide a seal against said plane 5.

Inside the heat insulating container 6, in proximity to the top wall 17 are provided evaporators 18 of liquefied gases of a refrigerating circuit, the detailed description whereof is omitted herein, as it does not interest the invention.

The horizontal plane 5 and the overlying heat insulating container 6 delimit in mutual combination a refrigeration chamber 7 in which the products undergo heat subtraction by thermal exchange: of the conductive type, with the refrigerated plane 5 and of the convective type with the ambient atmosphere cooled by the operation of the evaporators 18.

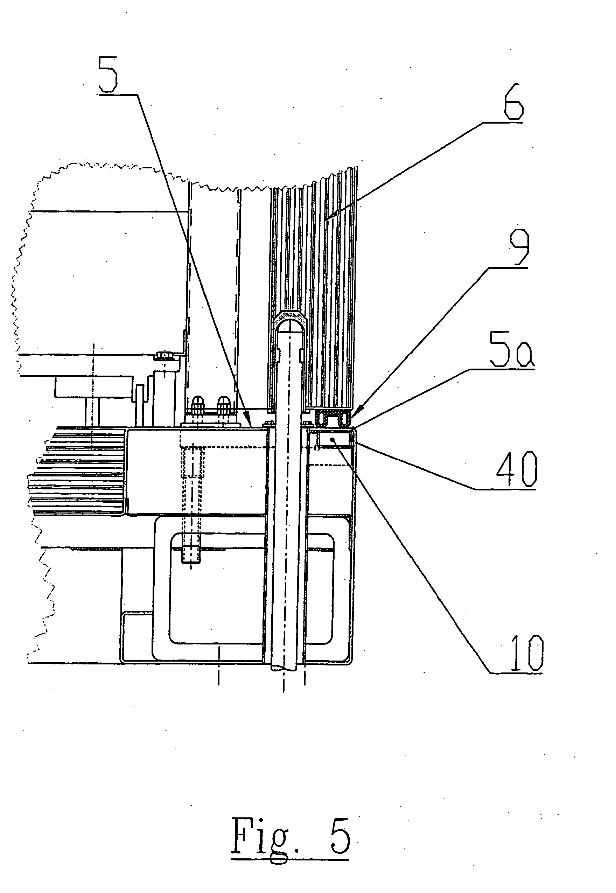

To prevent the gaskets 9 of the walls 8, by the same phenomenon, from adhering to the refrigerated plane 5 due to the low surface temperature of the plane 5 itself, the parts 5a of said plane 5 facing the area of operation of the gaskets 9 are heated (Figure 5).

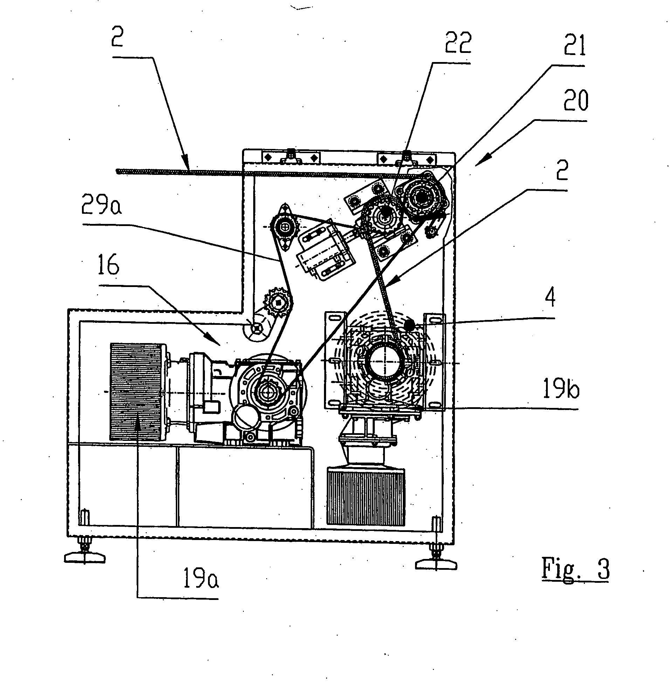

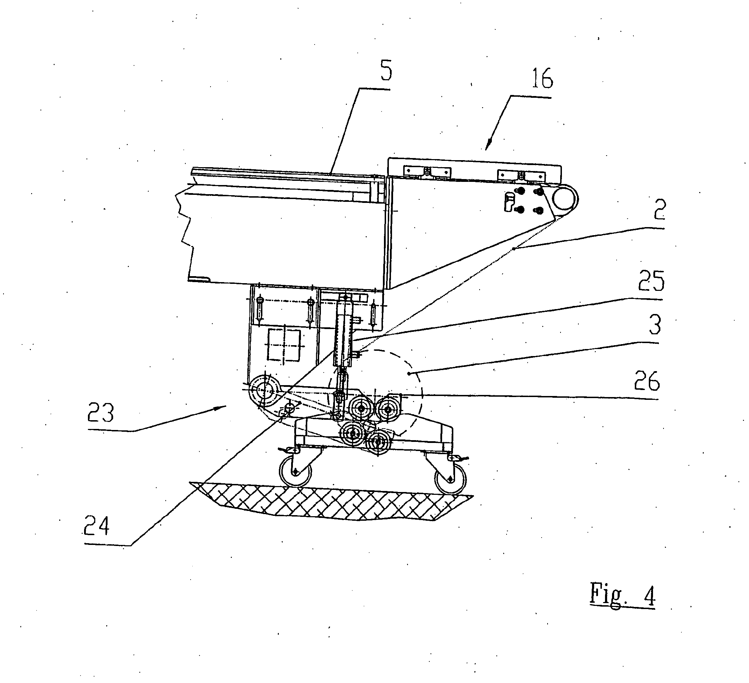

The film 2 is controlled by the aforesaid motorised advancement means 16 which in particular comprise: located at the opposite ends of the tunnel 1 [Figure 4], a first reel 3 dispensing the film; [Figure 3] a second reel 4 for collecting the used film 2; and a device 20 for driving the film 2 comprising in particular a roller 21 and a c ounter-roller 2 2 m utually a butting to clamp the interposed film 2 and to drive it simultaneously with their rotation.

The second reel 4 and the driving device 20 derive their respective motorisations from hydraulic motors 19a and 19b; in particular, the driving device also uses a belt or chain transmission 29a.

The reel 3 for dispensing the film 2 is supported in freely rotating conditions by loading or unloading means 23 which comprise a pair of parallel arms 24 and a linear actuator 25 operating with hydraulic fluid 11. The arms 24 have their own end articulated to the fixed structure 15 of the tunnel 1, the hydraulic fluid actuator 25 is interposed between the fixed structure 15 and arms 24 in such a way as to be able to raise and lower an end portion 26 of the arms 24 destined to support the reel 3 itself.

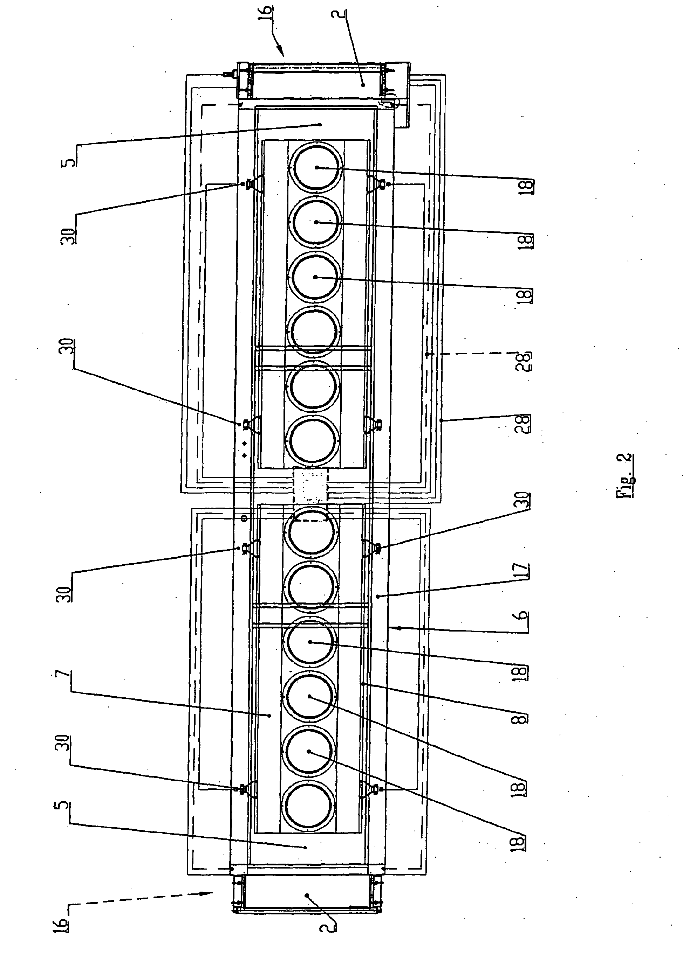

A hydraulic unit 27 (visible in Figures 1 and 2), preferably single, dispenses, through a first pipeline, globally designated by the reference number 28, the hydraulic fluid 11: to the motorised means 16 for the advancement of the reels 3 and 4; to the loading and unloading means of the dispensing reel 3 and/or to any similar means not shown in the drawings, but wholly similar which may be associated to the reel 4 for collecting the used film 2; and also to hydraulic actuators 30 which provided for raising and lowering the heat insulating container 6 relative to the refrigerated plane 5.

The same unit 27 dispenses, through a second pipeline 29 comprised in the heating circuit 12, the same hydraulic fluid 11, warm because it was heated due to the operation in the installation, also to opposite pipes 40 running immediately below the plane 5.

This allows the gaskets 9 to be heated at the expense of the resulting heat accumulated by the hydraulic fluid 11 during the operation of the tunnel 1: heat which would not only be irremediably lost and unusable, but which in fact would have to be dissipated to ensure the regular operation of the organs using the hydraulic fluid 11.

This solution, therefore, allows a dual advantage: that of enabling to heat the gaskets 9, without using external energy, in particular electrical energy; and that of enabling to reduce the heat exchange potential of all organs which are vice versa tasked with dissipating the heat accumulated by the hydraulic fluid 11; all this as a result of the advantageous cooling contribution offered by the gaskets 9 of the vertical lateral walls of the container 6.

The direct circulation of the hydraulic fluid 11 inside the gaskets 9 thus allows to maximise the effectiveness of the thermal recovery and it is particularly advantageous and useful to reduce installation costs as well.

Remaining within the scope of the innovative concept described above, constructive variations are possible which diversify the embodiments of the invention, without thereby changing its objects and advantages.

A possible embodiment variation of the tunnel 1, still advantageous and effective in terms of energy savings and in terms of operating costs containment, can be conceived imagining to make the heating fluid 10 and the heating fluid 11 circulate on two separate circuits, mutually interconnected by a heat exchanger. In a heating circuit 12 directly connected with the heating pipes 40 of the plane 5 can circulate for example water with glycol, in the other one, connected instead to the tank of the hydraulic unit 27 circulates the hydraulic fluid 11.

In the indicative and non limiting example of the invention described above, it is hypothesised to have the carrier fluid 10 circulate inside the plane 5; nonetheless, in an equivalent embodiment of the invention the same carrier fluid 10 may even circulate inside the gasket 9 if the shape and characteristics of said gasket allow it.

In addition to the practical possibility of conducting the hydraulic fluid 11 inside the gaskets 9, it is also possible to circulate within the gaskets, in the case of independent circuits, both water with glycol, and other equivalent fluids, possibly selected from the groups of inert fluids, compatible with the nature of the products treated by the refrigerating tunnel, if the potential, albeit remote, for contamination resulting from leaks from the gaskets 9 was feared.

The invention described above, in addition to providing a particularly advantageous and effective enhancement is also particularly well suited for a relatively simple operative interconnection with programmable electronic management means to the advantage of a highly flexible use of the freezing tunnel itself.

The invention thus conceived is suitable for evident industrial application.

## Claims

1. A tunnel for refrigerating food products, comprising motorised means (16, 3, 4, 20) for advancing the products in which a non re-usable film (2), unwinding from a first reel (3), is collected on a second reel (4) transiting above a planar support (5); and a heat insulating container (6), positioned above the planar support (5), which delimits therewith a chamber (7) for cooling the products; **characterised in that** said heat insulating container (6) is provided with walls (8) bearing gaskets (9) able to abut with the planar support (5) and to be heated by a heat carrying fluid (10); and the means (16, 3, 4, 20) for advancing the film are actuated by a hydraulic fluid (11); the heat carrying fluid (10) heating said gaskets (8) being heated by effect of the heat accumulated by said hydraulic fluid (11) during the operation of the advancement means (16; 3, 4, 20).

2. A tunnel, as claimed in claim 1, **characterised in that** the heat carrying fluid (10) heating said gaskets (9) is the same hydraulic fluid (11) of the advancement means (16; 3, 4, 20).

3. A tunnel, as claimed in claim 1, **characterised in that** it comprises a circuit (12) for heating the gaskets in which circulates said heat carrying fluid (10) which is selected among the fluids compatible with the food nature of the products; a heat exchanger traversed by said heat carrying fluid (10) and by said hydraulic fluid (11) allowing said heat carrying fluid (10) to be warmed at the expense of said hydraulic fluid (11).

4. A tunnel, as claimed in claim 3, **characterised in that** the heat carrying fluid (10) circulates in the gaskets (9).

5. A tunnel, as claimed in claim 4, **characterised in that** said heat carrying fluid is water with glycol.

6. Tunnel, as claimed in any of the previous claims, **characterised in that** it comprises loading means (23; 24, 25), operating with said hydraulic fluid (11), to load or unload said one or each reel (3; 4) of film (2) on said tunnel (1).

## Patentansprüche

1. Tunnel zum Kühlen von Lebensmitteln, bestehend aus:
- einer motorisierten Vorrichtung (16, 3, 4, 20) zum Vorschieben der Produkte, wobei eine Einwegfolie (2), die von der ersten Rolle (3) abgewickelt und auf einer zweiten, sich über einem flachen Gestell (5) befindlichen Rolle (4) wieder aufgerollt wird;
- einem Wärme dämmenden Behälter (6) über dem flachen Gestell (5), der als Abgrenzung einer Kammer (7) zum Kühlen von Produkten dient; die Wände (8) des besagten Wärme dämmenden Behälters (6) sind mit Dichtungen (9) ausgestattet, die an das flache Gestell (5) angrenzen und durch eine Wärme leitende Flüssigkeit erhitzt werden; die Vorrichtung (16, 3, 4, 20) für den Vorschub der Folie wird durch eine Hydraulikflüssigkeit (11) angetrieben.
- der Wärme leitenden Flüssigkeit (10), welche die o. g. Dichtungen (8) erhitzt und während des Betriebs der Vorschubvorrichtung (16, 3, 4, 20) durch die angesammelte Wärme der genannten Flüssigkeit (11) erhitzt wird.

2. Tunnel gem. Patentanspruch 1, **gekennzeichnet durch** folgendes Merkmal:
- Die Wärme leitende Flüssigkeit (1), welche die o. g. Dichtungen (9) erhitzt, ist dieselbe Hydraulikflüssigkeit (11) wie die der Vorschubvorrichtung (16, 3, 4, 20).

3. Tunnel gem. Patentanspruch 1, bestehend aus:
- einem Kreislauf (12) zur Erhitzung der Dichtungen, in denen die o. g. Wärme leitende und für den Gebrauch mit der Lebensmittelart der Produkte geeignete Flüssigkeit (1) fließt;
- einem Wärmetauscher, durch den die erwähnte Wärme leitende Flüssigkeit (10) und die Hydraulikflüssigkeit (11) fließt; letztere erhitzt die o. g. Wärme leitende Flüssigkeit (10) auf Kosten der besagten Hydraulikflüssigkeit (11).

4. Tunnel gem. Patentanspruch 3, **gekennzeichnet durch** folgendes Merkmal:
- Die Wärme leitende Flüssigkeit (10) fließt in den Dichtungen (9).

5. Tunnel gem. Patentanspruch 4, **gekennzeichnet durch** folgendes Merkmal:
- Die besagte Wärme leitende Flüssigkeit besteht aus Wasser mit Glykol.

6. Tunnel gem. einem jeden der oben aufgeführten Patentansprüche, **gekennzeichnet durch** folgendes Merkmal:
- Der Tunnel enthält eine Ladevorrichtung (23, 24, 25), die **durch** o. g. Hydraulikflüssigkeit (11) betrieben wird, zum Laden und Entladen der genannten Rolle bzw. Rollen (3, 4) mit Folie (2) im Tunnel (1).

## Revendications

1. Un tunnel pour réfrigérer les produits alimentaires, comprenant des dispositifs motorisés (16, 3, 4, 20) pour faire avancer les produits dans lesquels une pellicule non-réutilisable (2), se déroulant à partir d'une première bobine (3), est récupérée sur une deuxième bobine (4) transitant au-dessus d'un support plan (5); et un contenant isolé thermiquement (6), situé au-dessus du support plan (5), qui délimite avec celui-ci une chambre (7) pour réfrigérer les produits; **caractérisé en ce que** ledit contenant isolé thermiquement (6) est équipé de parois (8) portant des joints (9) capables d'être contigus au support plan (5) et d'être réchauffés par un fluide calovecteur; et les dispositifs (16, 3, 4, 20) pour faire avancer la pellicule sont actionnés par un fluide hydraulique (11); le fluide calovecteur (10) chauffant lesdits joints (8) étant réchauffé par l'effet de la chaleur accumulée par ledit fluide hydraulique (11) durant le fonctionnement des dispositifs d'avancement (16, 3, 4, 20).

2. Un tunnel, tel que revendiqué à la revendication 1, **caractérisé en ce que** le fluide calovecteur (10) chauffant lesdits joints (9) est le même fluide hydraulique (11) que celui des dispositifs d'avancement (16, 3, 4, 20).

3. Un tunnel, tel que revendiqué à la revendication 1, **caractérisé en ce qu'**il comprend un circuit (12) pour chauffer les joints dans lesquels circule ledit fluide calovecteur (10) qui est sélectionné parmi les fluides compatibles avec la nature alimentaire des produits; un échangeur de chaleur traversé par ledit fluide calovecteur (10) et par ledit fluide hydraulique (11) permettant audit fluide calovecteur (10) d'être réchauffé par ledit fluide hydraulique (11).

4. Un tunnel, tel que revendiqué à la revendication 3, **caractérisé en ce qu'**un fluide calovecteur (10) circule dans les joints (9).

5. Un tunnel, tel que revendiqué à la revendication 4, **caractérisé en ce que** ledit fluide calovecteur est de l'eau avec du glycol.

6. Un tunnel, tel que revendiqué à toutes les revendications précédentes, **caractérisé en ce qu'**il comprend les dispositifs de chargement (23, 24, 25), fonctionnant avec ledit fluide hydraulique (11), pour charger ou décharger ladite ou chaque bobine (3, 4) de la pellicule (2) sur ledit tunnel (1).
